# FASCICULE DE BREVET EUROPEEN

(11) **EP 2 321 113 B1**
(45) Date de publication et mention de la délivrance du brevet: **23.01.2013**
(21) Numéro de dépôt: 09797480.2
(22) Date de dépôt: 10.07.2009
(51) Int. Cl.: B29C 53/54, B65B 9/22, B29C 49/02

(54) **INSTALLATION DE MISE EN FORME DE BOUTEILLES À MOYENS DE CONFORMATION, ET PROCÉDÉ CORRESPONDANT**
EINRICHTUNG ZUM FORMEN VON FLASCHEN MIT FORMMITTELN UND ENTSPRECHENDES VERFAHREN
EQUIPMENT FOR SHAPING BOTTLES WITH SHAPING MEANS AND CORRESPONDING METHOD

(30) Priorité: 18.07.2008 FR 0854889
(43) Date de publication de la demande: 18.05.2011
(73) Titulaire: Eleftheriou, Stylianos, 78160 Marly Le Roi (FR)
(72) Inventeur: Eleftheriou, Stylianos, 78160 Marly Le Roi (FR)
(74) Mandataire: Larcher, Dominique
(86) Numéro de dépôt international: PCT/EP2009/058845
(87) Numéro de publication internationale: WO 2010/007004

(56) Documents cités:
- EP-A- 1 388 407
- FR-A- 2 851 227
- JP-A- 2006 103 690

## Description

### 1. Domaine de l'invention

Le domaine de l'invention est celui de la mise en forme de contenants alimentaires et du conditionnement de produits alimentaires.

Plus précisément, l'invention concerne une technique de mise en forme de bouteilles par thermoformage d'une feuille plastique et de conditionnement d'aliments liquides à l'intérieur des bouteilles ainsi obtenues.

### 2. Art antérieur

La demande de brevet français portant le numéro FR-A1-2 851 227, déposée au nom de la Déposante de la présente demande de brevet, décrit une telle technique de mise en forme et de conditionnement.

La technique décrite dans cette demande de brevet consiste à dérouler une feuille en matière plastique puis à la conformer autour d'une canne de soufflage et de remplissage en un cylindre dont les bords libres sont soudés. On entend par bord libre, les bords initialement libres de la feuille qui sont rapprochés puis soudés de façon à former un cylindre. Le cylindre obtenu est ensuite chauffé et introduit à l'intérieur d'un moule au sein duquel il est thermoformé par soufflage à chaud de façon à épouser la forme d'une bouteille. Après ouverture du moule, la bouteille en est évacuée et progressivement remplie d'un produit alimentaire. Après que la bouteille est évacuée du moule et remplie, le moule est de nouveau refermé de façon à sceller la partie supérieure de la bouteille alors qu'un nouveau cycle est initié.

Cette technique de mise en forme et de conditionnement en bouteille présente de nombreux avantages, notamment :
- elle permet de réduire les pertes de matière ;
- elle permet de réaliser des pots ou des bouteilles sans collerette ou avec une collerette tournée vers l'intérieur du pot ;
- elle permet d'intégrer dans la même opération : le formage, le remplissage, et le scellage de la bouteille ;
- elle permet de réaliser des formes très variées et originales propres à chaque produit ou client, ce qui permet une différenciation dans les linéaires.

Il n'en demeure pas moins que cette technique présente quelques inconvénients.

### 3. Inconvénients de l'art antérieur

Le principal inconvénient inhérent à la technique décrite dans cette demande de brevet est lié à la soudure des bords libres du cylindre formé par la feuille plastique.

En effet, cette soudure engendre la formation d'une surépaisseur permanente. Cette soudure, qui reste visible après la mise en forme de la bouteille, est particulièrement disgracieuse. Ceci représente un inconvénient important alors que l'on connaît assez bien l'impact de la qualité d'un produit perçue par un consommateur sur l'accomplissement de son acte d'achat.

La surépaisseur formée au niveau du cordon de soudure fait également naître le risque que le formage de la bouteille ne soit pas homogène et qu'elle ne présente en conséquence pas une forme régulière.

Afin de remédier à ces problèmes, et en particulier de prévenir la formation d'une surépaisseur au niveau du cordon de soudure, la Déposante a imaginé aplatir les bords libres de la feuille avant de procéder à leur soudure.

Notamment, la Déposante a proposé de mettre en oeuvre à cet effet une combinaison :
- de mollettes chauffantes entre lesquelles les bords devant être ultérieurement soudés sont acheminés de façon telle qu'ils soient écrasés, et
- de guides de refroidissement assurant le figeage des bords venant d'être aplatis.

Cette solution permet certes d'améliorer la qualité de la soudure. Elle ne permet toutefois pas d'obtenir une soudure à la hauteur de la qualité escomptée. Au demeurant, cette solution se révèle être relativement difficile et coûteuse à mettre en oeuvre.

À côté des considérations d'ordre esthétique de la soudure se posent des problèmes d'ordre structurel.

En effet, il est relativement difficile de conformer une feuille plastique en un cylindre de façon convenable. Ainsi, dans un grand nombre de cas, les bords libres de la feuille conformée en cylindre ne s'étendent pas parfaitement bord à bord ou à proximité l'un de l'autre en sorte qu'un espace les sépare. Il en résulte que la soudure n'est pas parfaitement linéaire et surtout qu'elle laisse une ou plusieurs voies si bien que la bouteille obtenue après mise en forme n'est pas parfaitement hermétique.

Bien que les bords ne soient pas parfaitement alignés au moment de la soudure, il peut arriver que la soudure soit hermétique. Toutefois, il arrive souvent dans ce cas que la soudure manque de robustesse et qu'elle cède soit sous l'effet du produit contenu par la bouteille, soit sous l'effet de chocs que celle-ci peut être amenée à absorber par exemple au cours de son transport ou de sa manipulation.

Ceci constitue une cause de rebut important qui représente un coût non négligeable et suffisamment élevé pour qu'il soit requis d'y remédier.

### 4. Objectifs de l'invention

L'invention a notamment pour objectif de pallier ces inconvénients de l'art antérieur.

Plus précisément, un objectif de l'invention, dans au moins un mode de réalisation de l'invention, est de fournir une technique de mise en forme de bouteille par thermoformage d'une feuille plastique qui soit efficace, à tout le moins dans de plus amples proportions comparativement à la technique de l'art antérieur.

Notamment, un objectif de la présente invention est de proposer une technique permettant la mise en oeuvre d'une largeur de recouvrement de la feuille plastique sur elle-même la plus faible possible tout en garantissant une bonne qualité de soudure dans le temps.

L'invention vise ainsi à mettre en oeuvre, dans au moins un mode de réalisation de l'invention, une telle technique qui conduise à obtenir un soudage efficace du tube et donc, après thermoformage, de la bouteille.

Notamment, l'invention poursuit l'objectif d'offrir, dans au moins un mode de réalisation de l'invention, une telle technique qui conduise à la mise en forme de bouteilles dont la soudure soit hermétique.

Un objectif de l'invention est également de fournir, dans au moins un mode de réalisation de l'invention, une telle technique qui conduise à la mise en oeuvre de bouteilles dont la soudure soit particulièrement esthétique.

L'invention a encore pour objectif de proposer, dans au moins un mode de réalisation de l'invention, une telle technique qui permette de produire des bouteilles robustes.

L'invention vise encore à offrir, dans au moins un mode de réalisation de l'invention, une telle technique qui soit facile à mettre en oeuvre et relativement bon marché.

### 5. Exposé de l'invention

Ces objectifs, ainsi que d'autres qui apparaîtront par la suite, sont atteints à l'aide d'une installation de mise en forme de bouteilles par thermoformage d'une feuille en matière plastique selon la revendication 1 et d'un procédé selon la revendication 8.

Selon l'invention, une telle installation comprend des moyens de conformation en cylindre de ladite feuille, lesdits moyens de conformation étant placés en amont desdits moyens de moulage et comprenant une première et une deuxième mâchoires arrangées autour de ladite canne dont les contours intérieurs définissent un cylindre, ladite deuxième mâchoire présentant une lumière s'étendant longitudinalement sur au moins une portion de sa longueur et en regard de laquelle s'étendent lesdits moyens de soudage, des moyens d'arrêt formant butée pour au moins l'un des bords libre de ladite feuille s'étendant essentiellement dans l'axe de ladite lumière.

Ainsi, l'invention repose sur une approche tout à fait innovante conduisant à conformer de façon efficace une feuille plastique en un cylindre dont les bords libres sont parfaitement soudés sans surépaisseur par la mise en oeuvre d'un conformateur conçu à cet effet.

Un tel conformateur comprend deux mâchoires définissant un contour intérieur cylindrique et dont l'une présente une lumière permettant le passage de moyens de soudage et dans l'axe de laquelle s'étendent des butées.

Ainsi, une feuille plastique peut être introduite dans le conformateur de telle manière qu'elle en épouse le contour intérieur cylindrique. La feuille est orientée à l'intérieur du conformateur de sorte que l'un au moins de ses bords libres viennent en butée contre les moyens d'arrêt prévus à cet effet. Ainsi, après qu'elle a été introduite dans le conformateur, la feuille se présente sous la forme d'un cylindre dont les bords libres sont placés à proximité l'un de l'autre ou sont légèrement superposés dans l'axe de la lumière. La mise en oeuvre des moyens de soudure placés au niveau de la lumière permet alors de souder les bords libres « proprement », c'est-à-dire de façon hermétique, régulière et sans surépaisseur.

La mise en oeuvre d'un conformateur selon l'invention conduit ainsi à la mise en oeuvre de bouteilles robustes, hermétiques et esthétiques.

Selon une caractéristique avantageuse de l'invention, lesdites mâchoires sont mobiles transversalement par rapport à ladite canne entre :
- une position ouverte dans laquelle elles sont éloignées de ladite canne, et
- une position fermée dans laquelle elles enserrent ladite canne.

Cette approche permet de faciliter la conformation d'une feuille en cylindre par le passage des mâchoires de leur position ouverte à leur position fermée.

Avantageusement, ladite deuxième mâchoire présente un contour intérieur définissant deux quarts de cylindre concentriques et de rayons différents, lesdits quarts de cylindre étant jointifs dans l'axe de ladite lumière.

La jonction entre les deux quart de cylindre permet ainsi la création de moyens d'arrêt contre lesquels un bord libre de la feuille peut venir en butée alors que les mâchoires passent de leur position ouverte à leur position fermée. Ceci permet de maintenir les bords libres de la feuille en regard de la lumière, légèrement superposés l'un sur l'autre selon une largeur la plus faible possible et constante sur toute la hauteur de la feuille se trouvant à l'intérieur du conformateur, et conduit à l'obtention d'une soudure présentant de bonnes qualités notamment dans le temps.

Selon une caractéristique préférée, une installation selon l'invention comprend des moyens de pré-conformation de ladite feuille, lesdits moyens de pré-conformation étant placés en amont desdits moyens de conformation.

La mise en oeuvre de tels moyens de pré-conformation permet de faciliter l'introduction de la feuille à l'intérieur du conformateur et sa conformation en cylindre.

Avantageusement, lesdits moyens de pré-conformation comprennent des moyens de guidage de ladite feuille, lesdits moyens de guidage définissant une surface de guidage présentant une entrée essentiellement plane et se resserrant progressivement pour déboucher sur une sortie définissant au moins une portion de cercle ouvert.

Une telle structure permet d'amener progressivement la feuille à épouser la forme d'un cylindre juste avant son introduction à l'intérieur du conformateur.

Préférentiellement, ladite surface de guidage est formée par une pluralité d'éléments filaires disposés côte à côte.

Cette approche est particulièrement simple et peu coûteuse à réaliser tout en permettant d'obtenir de bons résultats en terme de pré-conformation.

Selon une caractéristique avantageuse, lesdits moyens de pré-conformation comprennent des éléments formant butée anti-rotation desdits bords libres de ladite feuille.

La mise en oeuvre de telles butées permet d'assurer un pré positionnement angulaire des bords libres de la feuille et d'assurer que l'un des bords libres de la feuille plastique viendra bien en butée sur les moyens d'arrêt du conformateur lors de sa fermeture.

L'invention porte également sur un procédé de mise en forme de bouteilles par thermoformage d'une feuille plastique par la mise en oeuvre d'une installation telle que précédemment décrite, un tel procédé comprenant une étape de conformation en cylindre de ladite feuille plastique, une étape de soudure longitudinale des bords libres dudit cylindre, une étape de formage d'une bouteille par soufflage à chaud dudit cylindre au sein desdits moyens de moulage et une étape de remplissage de ladite bouteille.

Selon l'invention, ladite étape de conformation comprend les sous étapes suivantes :
- positionnement de ladite feuille par rapport auxdits moyens de conformation en sorte que ses bords libres se trouvent essentiellement dans l'alignement desdits moyens d'arrêt et de l'axe de ladite lumière ;
- introduction de ladite feuille à l'intérieur desdits moyens de conformation entre lesdites première et deuxième mâchoires ;
et ladite étape de soudure est mise en oeuvre après introduction de ladite feuille à l'intérieur desdits moyens de conformation.

Une telle technique permet d'obtenir facilement un tube formé à partir d'une feuille plastique en vu de lui conférer la forme d'une bouteille par thermoformage.

Préférentiellement, ladite étape d'introduction est mise en oeuvre lorsque lesdites mâchoires se trouvent dans ladite position ouverte et ladite étape de soudure est mise en oeuvre après positionnement desdites mâchoires dans ladite position fermée.

L'introduction de la feuille dans le conformateur alors que les mâchoires sont ouvertes est facilitée. Le passage de la position ouverte à la position fermée des mâchoires alors que la feuille y est introduite permet d'achever la conformation de la feuille en tube de telle manière que ses bords libres se trouvent en regard de la lumière et légèrement superposés. Il est alors possible de souder efficacement ces bords libres afin d'obtenir une jonction solide, hermétique et esthétique.

Avantageusement, ladite étape de conformation est précédée d'une étape de pré-conformation.

Dans ce cas, ladite étape de pré-conformation consiste avantageusement à faire glisser ladite feuille contre ladite surface de guidage présentant une entrée essentiellement plane et se resserrant progressivement pour déboucher sur une sortie définissant une portion de cercle.

Ceci permet de conférer progressivement et efficacement la forme d'un cylindre à la feuille avant son entrée dans le conformateur, ce qui conduit à améliorer la conformation de la feuille en tube et ultérieurement la soudure des bords libres de la feuille.

Avantageusement, lesdites étapes de pré-conformation et de conformation sont réalisées à froid.

Il a en effet été constaté qu'il n'était pas toujours nécessaire de réchauffer la feuille plastique avant sa pré-conformation et/ou sa conformation. Dans certains cas, un tel chauffage peut conduire à réduire la qualité des bouteilles obtenues par la mise en oeuvre de la technique selon l'invention. Ceci est notamment le cas en ce qui concerne les feuilles plastiques présentant une faible épaisseur.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un schéma en perspective d'un exemple de conformateur selon l'invention ;
- la figure 2 illustre une vue de dessus du conformateur de la figure 1 dont les mâchoires sont placées en position ouverte ;
- la figure 3 est une vue de dessus des mâchoires illustrée à la figure 2 placées en position fermée ;
- les figures 4a et 4b sont des schémas en perspective illustrant un exemple de pré-conformateur selon l'invention ;
- la figure 5 illustre une installation de mise en forme et de conditionnement qui comprend un pré-conformateur et un conformateur selon l'invention.

### 7. Description d'un mode de réalisation de l'invention

### 7.1. Rappel du principe de l'invention

Le principe général de l'invention repose sur la mise en oeuvre de moyens de conformation de façon à faire adopter à une feuille plastique la forme d'un cylindre préalablement à son thermoformage sous la forme d'une bouteille.

Ces moyens de conformation, qui sont placés en amont de moyens de moulage de la feuille, comprennent deux mâchoires dont les contours intérieurs définissent un cylindre. Une de ces mâchoires est traversée par une lumière longitudinale dans l'axe de laquelle s'étendent des moyens d'arrêt.

L'introduction de la feuille plastique à l'intérieur du conformateur en sorte que l'un au moins des bords libres de la feuille vient en butée contre les moyens d'arrêt permet de lui conférer la forme d'un cylindre dont les bords libres s'étendent régulièrement et à proximité l'un de l'autre dans l'axe de la lumière. La mise en oeuvre des moyens de soudages placés au niveau de la lumière permet alors de souder les bords libres du cylindre.

La mise en oeuvre d'un conformateur selon l'invention permet d'obtenir un cylindre dont les bords libres sont correctement soudés, de façon régulière et sans surépaisseur. Ceci conduit ultérieurement à l'obtention de bouteilles robustes, hermétiques et esthétiques.

### 7.2. Exemple d'un conformateur selon l'invention

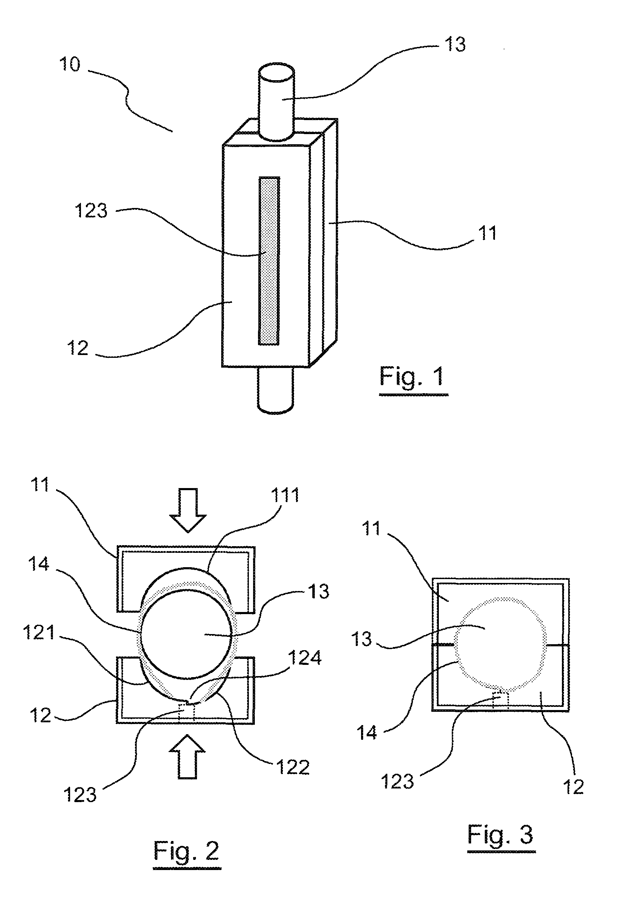

On présente, en relation avec les figures 1 à 3, un mode de réalisation d'un conformateur selon l'invention.

Tel que cela est représenté, un tel conformateur 10 comprend une première 11 et une deuxième 12 mâchoires. Ces mâchoires 11, 12 sont arrangées autour d'une canne 13 de soufflage et/ou de remplissage de forme cylindrique, dont la fonction sera explicitée plus en détails par la suite.

La figure 2, qui illustre une vue de dessus du conformateur 10, laisse apparaître que la première mâchoire 11 présente un contour intérieur définissant un demi-cylindre 111.

La deuxième mâchoire 12 présente un contour intérieur définissant deux quarts de cylindre 121, 122. Les quarts de cylindre 121 et 122 sont concentriques et présentent des rayons de valeurs différentes.

Cette deuxième mâchoire 12 est traversée par une lumière 123 qui s'étend longitudinalement sur au moins une portion de la longueur de cette mâchoire 12.

Les quarts de cylindre 121, 122 se rejoignent dans l'axe de la lumière 123. Du fait qu'ils sont concentriques et présentent des rayons différents, ils forment de part et d'autre de la lumière des moyens d'arrêt 124 formant butée. Ces moyens d'arrêt 124 présentent avantageusement une hauteur de l'ordre du millimètre.

Les mâchoires 11, 12 sont mobiles en translation par rapport à la canne 13 entre une position ouverte, illustrée à la figure 2, dans laquelle elle sont éloignée de la canne 13, et une position fermée, illustrée à la figure 3, dans laquelle elles sont enserrées autour de la canne 13.

Le fait d'indiquer que les mâchoires 11, 12 sont enserrées autour de la canne 13 dans leur position fermée ne signifie pas qu'elles viennent en butée et exercent une pression contre la paroi périphérique de la canne 13. Au contraire, les rayons du demi-cylindre 111 et des quarts de cylindre 121, 122 sont choisis de telle manière qu'il existe un jeu entre le contour intérieur des mâchoires 11, 12 placées en position fermée et le contour extérieur de la canne 13. La valeur de ce jeu sera suffisante pour permettre l'interposition d'une feuille plastique 14 entre le contour extérieur de la canne 13 et les contours intérieurs des mâchoires 11, 12 lorsque celles-ci occupent leur position fermée.

Avantageusement, une telle feuille de plastique 14 présentera une épaisseur comprise entre 0,4 et 0,8 millimètre.

Les mâchoires 11, 12 peuvent être déplacées d'une position à l'autre par la mise en oeuvre de vérins hydrauliques ou pneumatiques non représentés, ou tout autre moyen adapté.

### 7.3. Exemple d'un pré-conformateur

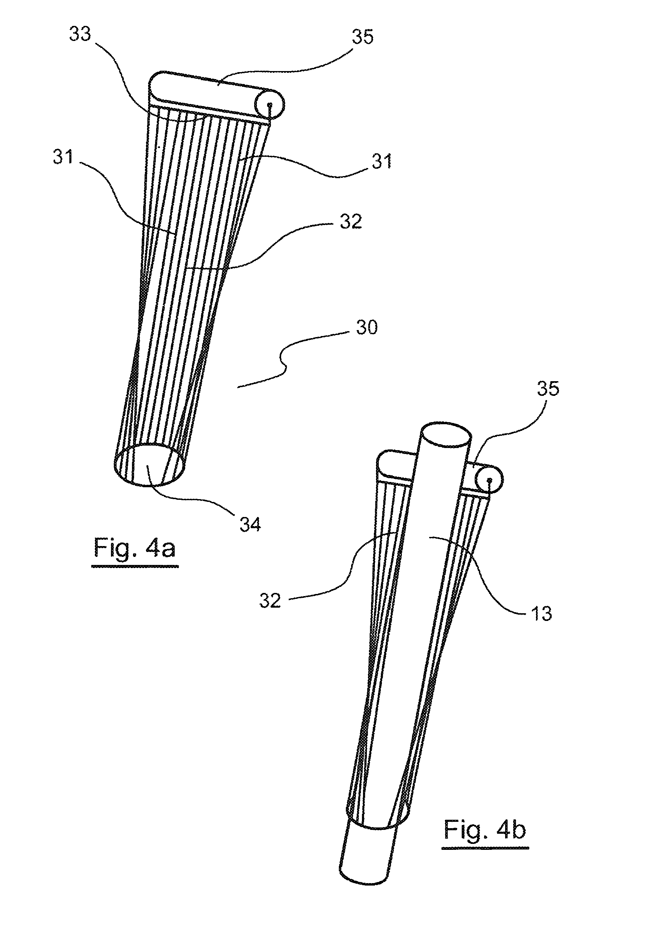

On présente en relation avec les figures 4a et 4b un exemple de pré-conformateur 30 selon l'invention.

Un tel pré-conformateur 30 est destiné à être installé, optionnellement, à l'entrée du conformateur 10 qui vient d'être décrit.

Tel que cela est représenté, un tel pré-conformateur 30 comprend une pluralité de fils métalliques 31 qui sont positionnés côte à côte de façon à définir une surface de guidage 32 dont l'entrée 33 est essentiellement plane et qui se resserre progressivement pour déboucher sur une sortie 34 définissant une portion de cercle ouvert entourant au moins partiellement la canne 13.

Le pré-conformateur 30 comprend à son entrée un rouleau 35 pour permettre d'y faciliter l'introduction de la feuille plastique 14.

La surface de guidage 32 est ici formée en positionnant plusieurs fils métalliques les uns à côté des autres. Juste en amont de l'entrée du conformateur, des butées anti-rotation (non représentées) peuvent être positionnées sur le pré-conformateur 30 afin de favoriser le positionnement angulaire des bords libres de la feuille par rapport à la lumière 123 de soudure dans le conformateur. Ces butées anti-rotation peuvent par exemple se présentée sous la forme de griffes placées à la sortie du pré-conformateur et à l'intérieur desquelles coulissent les bords libres de la feuille plastique. Ce pré positionnement angulaire permet de s'assurer que le bord libre extérieur de la feuille plastique viendra bien en butée sur les moyens d'arrêt 124 du conformateur lors de sa fermeture.

D'autres formes de réalisation pourront bien entendu être mises en oeuvre pour générer la surface de guidage 32. Elle pourra par exemple être obtenue au moyen d'une feuille métallique ou plastique courbée de façon à épouser la forme souhaitée ou de toute autre manière adaptée.

### 7.4. Exemple d'une installation mettant en oeuvre un conformateur selon l'invention

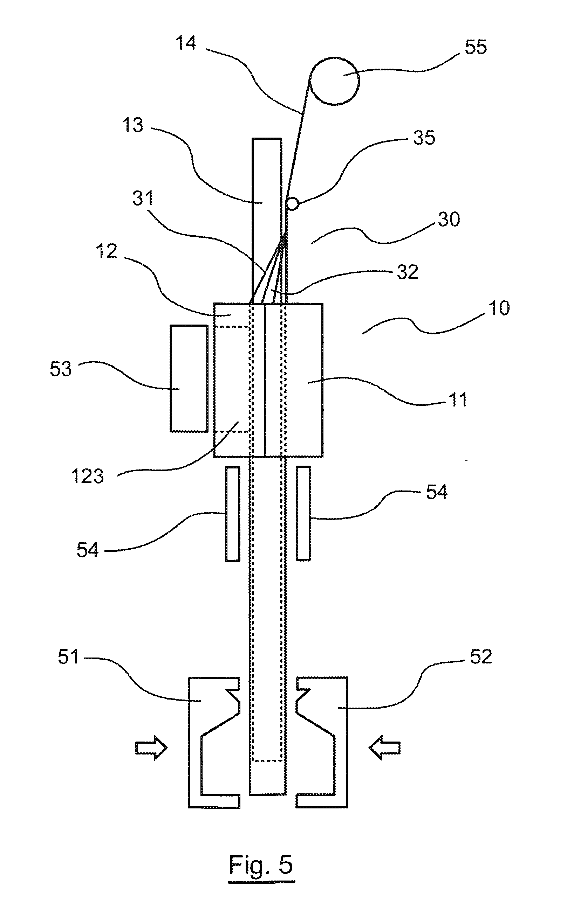

On présente en relation avec la figure 5 un exemple d'une installation de mise en forme de bouteilles par thermoformage d'une feuille plastique et de conditionnement selon l'invention.

Une telle installation comprend une canne de soufflage et/ou de remplissage 13, des moyens de moulage comprenant deux demi-moules 51, 52.

Un conformateur 10 selon l'invention est placé en amont des moyens de moulage 51, 52. Des moyens de soudage 53, par exemple par ultrasons, sont placés en regard de la lumière 123 ménagée à travers la deuxième mâchoire 12.

Dans ce mode de réalisation, un pré-conformateur 30 selon l'invention est placé à l'entrée du conformateur 10. On note que cette mise en oeuvre est optionnelle. Dans une variante de ce mode de réalisation, le pré-conformateur 30 pourra ne pas être utilisé.

Des moyens de chauffage 54 sont placés entre la sortie du conformateur 10 et l'entrée des demi-moules 51, 52. Il peut notamment s'agir de chauffage par rayonnement, par convection, par insufflation d'air chaud ou tout autre moyen de chauffage adapté comme par exemple des moyens de chauffage par rayonnement infrarouge.

### 7.5. Procédé de mise en forme de bouteilles selon l'invention

Un procédé de mise en forme de bouteilles par thermoformage d'une feuille plastique présentant une épaisseur de l'ordre de 0,5 mm (variant entre 0,4 et 0,8 mm dans la majorité des cas) et de conditionnement de produits alimentaires selon l'invention va maintenant être décrit.

Une feuille plastique 14 se présentant sous la forme d'un rouleau 55 est déroulée et guidée jusqu'à l'entrée du pré-conformateur 30. Elle entre alors en contact avec le rouleau de guidage 35 et s'introduit progressivement dans le pré-conformateur 30.

La feuille 14 glisse contre la surface de guidage 32 formée par les fils 31 en sorte que ses bords libres se rapprochent progressivement et que son extrémité dessine progressivement un cercle ou à tout le moins une portion de cercle.

La feuille plastique 14 ainsi préformée est introduite à l'intérieur du conformateur 10 alors que ses mâchoires 11, 12 se trouvent en position ouverte. On notera que, dans le cadre du présent exemple non limitatif de description d'un mode de réalisation de l'invention, le préformage est effectué à froid, mais que dans d'autres modes de réalisation mettant en oeuvre des épaisseurs de feuille plastique plus importantes, un réchauffement de la feuille avant son passage dans le pré-conformateur ou lors de son passage dans celui-ci pourra être mis en oeuvre.

Le pré-conformateur 30 est orienté de telle manière que la feuille plastique 14 préformée se présente à l'entrée du conformateur 10 telle que cela est représenté sur la figure 2. De cette façon, les bords libres de la feuille plastique 14 se présentent approximativement dans l'axe de la lumière 123.

Les mâchoires 11, 12 du conformateur 10 sont ensuite animées d'un mouvement de translation transversalement par rapport à la canne 13 de façon à venir progressivement occuper leur position fermée telle qu'elle est illustrée à la figure 3.

Au cours de ce déplacement, les bords libres de la feuille plastique 14 logée à l'intérieur du conformateur 10 glissent contre les contours intérieurs des mâchoires 11, 12 et viennent enserrer la périphérie de la canne 13. Un des bords libres de la feuille plastique 14 vient progressivement en butée contre les moyens d'arrêt 124 formés à l'interface des deux quarts de cylindre 121, 122 de la deuxième mâchoire 12.

Une fois les mâchoires 11, 12 placées dans leur position fermée, l'un des bords libres de la feuille plastique 14 est en butée contre les moyens d'arrêt 124. L'autre bord libre recouvre légèrement le premier sur une distance inférieure à 1 millimètre. Ces deux bords libres se trouvent ainsi rapprochés l'un de l'autre de manière régulière sensiblement dans l'axe de la lumière 123, et la feuille plastique 14 se présente sous la forme d'un cylindre.

Les mâchoires 11, 12 sont maintenues en position fermée et les moyens de soudage 53 sont mis en oeuvre, après quoi les deux bords libres de la feuille plastique 14 sont soudés l'un à l'autre.

De façon avantageuse, les moyens de soudage 53 comprennent des moyens de soudage par ultra-son. Dans ce cas, la canne 13 constitue une enclume pour la sonotrode de soudure qui présente avantageusement une paroi incurvée épousant la forme de la canne.

La mise en oeuvre d'un conformateur 10 selon l'invention permet d'obtenir la conformation à froid de la feuille 14 en un cylindre dont les bords initialement libres sont réunis par une soudure régulière, hermétique et robuste. Cette soudure présente en outre l'avantage de présenter une surépaisseur finale négligeable de l'ordre de seulement 0,1 millimètre, contrairement à la technique de l'art antérieur.

Après que les deux bords libres sont soudés, les mâchoires 11, 12 sont de nouveau déplacées dans leur position ouverte. La feuille plastique 14 conformée en cylindre est ensuite déplacée vers les moyens de moulage 51, 52.

On comprend que le déplacement du cylindre venant d'être conformé s'accompagne du déroulement du rouleau 55 et donc de la pré-conformation d'une troisième partie de feuille au sein de pré-conformateur 30 alors qu'une deuxième partie de feuille est en cours de conformation à l'intérieur du conformateur 10.

Au cours du déplacement du cylindre vers les moyens de moulage, les moyens de chauffage 54 sont activés de manière à chauffer le cylindre. Celui-ci est alors introduit entre les deux demi-moules 51, 52 qui sont ensuite refermés contre la canne 13.

Après que le moule est refermé, de l'air sous pression est acheminé dans le moule par l'intermédiaire de la canne 13. La matière plastique ramollie du cylindre est plaquée contre les parois intérieures des demi-moules 51, 52 sous l'effet de la pression de l'air et se refroidit à leur contact.

Le moule est ensuite ouvert et la bouteille thermoformée est progressivement remplie d'un produit alimentaire alors même qu'elle est évacuée du moule.

Une fois le remplissage de la bouteille et son extraction du moule achevés, le moule est de nouveau refermé de manière à sceller la partie supérieure de la bouteille.

Dans le même temps, une nouvelle bouteille est en cours de mise en forme à l'intérieur du moule.

La partie supérieure du scellement de la bouteille est ensuite sectionnée de façon à libérer la bouteille scellée de la bouteille nouvellement formée.

### 7.6. Avantages

La mise en oeuvre d'un conformateur selon l'invention présente l'avantage de permettre la réalisation de manière simple d'une soudure régulière, robuste ne présentant une surépaisseur finale que de l'ordre de 0,1 millimètre.

Les bouteilles obtenues par la mise en oeuvre de l'invention sont donc solides, hermétiques et particulièrement esthétiques.

Par ailleurs, la mise en oeuvre d'un pré-conformateur selon l'invention permet d'accroître encore davantage les qualités de la soudure.

## Revendications

1. Installation de mise en forme de bouteilles par thermoformage d'une feuille en matière plastique (14), ladite installation comprenant une canne de soufflage et/ou de remplissage (13), des moyens de soudage (53), et des moyens de moulage (51, 52) desdites bouteilles,
des moyens de conformation (10) en cylindre de ladite feuille (14), lesdits moyens de conformation (10) étant placés en amont desdits moyens de moulage (51, 52), **caractérisée en ce que** lesdits moyens de conformation comprennent une première (11) et une deuxième (12) mâchoires arrangée autour de ladite canne (13) dont les contours intérieurs (111, 121, 122) définissent un cylindre, ladite deuxième mâchoire (12) présentant une lumière (123) s'étendant longitudinalement sur au moins une portion de sa longueur et en regard de laquelle s'étendent lesdits moyens de soudage (53), des moyens d'arrêt formant butée (124) pour au moins l'un des bords libre de ladite feuille (14) s'étendant essentiellement dans l'axe de ladite lumière (123).

2. Installation selon la revendication 1, **caractérisée en ce que** lesdites mâchoires (11, 12) sont mobiles transversalement par rapport à ladite canne (13) entre :
- une position ouverte dans laquelle elles sont éloignées de ladite canne (13), et
- une position fermée dans laquelle elles enserrent ladite canne (13).

3. Installation selon l'une quelconque des revendications 1 à 2, **caractérisée en ce que** ladite deuxième mâchoire (12) présente un contour intérieur définissant deux quarts de cylindre (121, 122) concentriques et de rayons différents, lesdits quarts de cylindre (121, 122) étant jointifs dans l'axe de ladite lumière (123).

4. Installation selon l'une quelconque des revendications 1 à 3, **caractérisée en ce qu'**elle comprend des moyens de pré-conformation (30) de ladite feuille (14), lesdits moyens de pré-conformation (30) étant placés en amont desdits moyens de conformation (10).

5. Installation selon la revendication 4, **caractérisée en ce que** lesdits moyens de pré-conformation (30) comprennent des moyens de guidage de ladite feuille (14), lesdits moyens de guidage définissant une surface de guidage (32) présentant une entrée (33) essentiellement plane et se resserrant progressivement pour déboucher sur une sortie (34) définissant au moins une portion de cercle ouvert.

6. Installation selon la revendication 5, **caractérisée en ce que** ladite surface de guidage (32) est formée par une pluralité d'éléments filaires (31) disposés côte à côte.

7. Installation selon l'une quelconque des revendications 4 à 6, **caractérisée en ce que** lesdits moyens de pré-conformation comprennent des éléments formant butée anti-rotation desdits bords libres de ladite feuille (14).

8. Procédé de mise en forme de bouteilles par thermoformage d'une feuille plastique (14) par la mise en oeuvre d'une installation selon l'une quelconque des revendications 1 à 7, ledit procédé comprenant une étape de conformation en cylindre de ladite feuille plastique (14), une étape de soudure longitudinale des bords libres dudit cylindre, une étape de formage d'une bouteille par soufflage à chaud dudit cylindre au sein desdits moyens de moulage (51, 52) et une étape de remplissage de ladite bouteille,
ladite étape de conformation comprenant les sous étapes suivantes :
- positionnement de ladite feuille (14) par rapport auxdits moyens de conformation (10) en sorte que ses bords libres se trouvent essentiellement dans l'alignement desdits moyens d'arrêt (124) et de l'axe de ladite lumière (123) ;
- introduction de ladite feuille (14) à l'intérieur desdits moyens de conformation (10) entre lesdites première (11) et deuxième (12) mâchoires ;
et ladite étape de soudure étant mise en oeuvre après introduction de ladite feuille (14) à l'intérieur desdits moyens de conformation (10).

9. Procédé selon la revendication 8, **caractérisé en ce que** ladite étape d'introduction est mise en oeuvre lorsque lesdites mâchoires (11, 12) se trouvent dans ladite position ouverte et **en ce que** ladite étape de soudure est mise en oeuvre après positionnement desdites mâchoires (11, 12) dans ladite position fermée.

10. Procédé selon l'une quelconque des revendications 8 et 9, **caractérisé en ce que** ladite étape de conformation est précédée d'une étape de pré-conformation.

11. Procédé selon la revendication 10, **caractérisé en ce que** ladite étape de pré-conformation consiste à faire glisser ladite feuille (14) contre ladite surface de guidage (32) présentant une entrée (33) essentiellement plane et se resserrant progressivement pour déboucher sur une sortie (34) définissant une portion de cercle.

12. Procédé selon l'une quelconque des revendications 8 à 11, **caractérisé en ce que** lesdites étapes de pré-conformation et de conformation sont réalisées à froid.

## Claims

1. Equipment for shaping bottles by thermoforming a plastic sheet (14), said equipment comprising a blowing and/or filling tube (13), sealing means (53), and moulding means (51, 52) for said bottles,
means (10) for shaping said sheet (14) into a cylinder, said shaping means (10) being positioned upstream from said moulding means (51, 52) **characterised in that** said configuration means comprise first (11) and second (12) jaws arranged about said tube (13) wherein the inner contours (111, 121, 122) define a cylinder, said second jaw (12) having a slot (123) extending longitudinally on at least one portion of the length thereof and opposite of which sealing means (53) extend, stopping means acting as an abutment (124) for at least one of the free edges of said sheet (14) extending essentially in the axis of said slot (123).

2. Equipment according to claim 1, **characterised in that** said jaws (11, 12) are transversally movable with respect to said tube (13) between:
- an open position wherein they are removed from said tube (13), and
- a closed position wherein they encompass said tube (13).

3. Equipment according to any of claims 1 to 2, **characterised in that** said second jaw (12) has an inner contour defining two concentric quarter cylinders (121, 122) having different radii, said quarter cylinders (121, 122) being joined in the axis of said slot (123).

4. Equipment according to any of claims 1 to 3, **characterised in that** it comprises means (30) for pre-shaping said sheet (14), said pre-shaping means (30) being positioned upstream from said shaping means (10).

5. Equipment according to claim 4, **characterised in that** said pre-shaping means (30) comprise means for guiding said sheet (14), said guiding means defining a guiding surface (32) having an essentially plane entry (33), progressively tapering to lead to an exit (34) defining at least one open portion of a circle.

6. Equipment according to claim 5, **characterised in that** said guiding surface (32) consists of a plurality of wire elements (31) arranged side by side.

7. Equipment according to any of claims 4 to 6, **characterised in that** said pre-shaping means comprising elements acting as an anti-rotation abutment in respect of said free edges of said sheet (14).

8. Method for shaping bottles by thermoforming a plastic sheet (14) using equipment according to any of claims 1 to 7, said method comprising a step for shaping said plastic sheet (14) into a cylinder, a step for longitudinally sealing the free edges of said cylinder, a step for shaping a bottle by hot-blowing said cylinder in said moulding means (51, 52) and a step for filling said bottle,
said shaping step comprising the following substeps:
- positioning said sheet (14) with respect to said shaping means (10) such that the free edges thereof are essentially aligned with said stopping means (124) and the axis of said slot (123);
- feeding said sheet (14) into said shaping means (10) between said first (11) and second (12) jaws;
and said sealing step being carried out after feeding said sheet (14) into said shaping means (10).

9. Method according to claim 8, **characterised in that** said feeding step is carried out when said jaws (11, 12) are in said open position and **in that** said sealing step is carried out after positioning said jaws (11, 12) in said closed position.

10. Method according to any of claims 8 and 9, **characterised in that** said shaping step is preceded by a pre-shaping step.

11. Method according to claim 10, **characterised in that** said pre-shaping step consists of sliding said sheet (14) against said guiding surface (32) having an essentially plane entry (33) progressively tapering to lead to an exit (34) defining a portion of a circle.

12. Method according to any of claims 8 to 11, **characterised in that** said pre-shaping and shaping steps are performed in the cold.

## Patentansprüche

1. Anlage zum Formen von Flaschen mittels Thermoformung einer Folie aus Kunststoff (14), wobei die Anlage ein Blas- und/oder Füllrohr (13), Schweißmittel (53) und Mittel zur Formung (51, 52) der Flaschen,
Mittel zur Ausgestaltung (10) der Folie (14) zu einem Zylinder umfasst, wobei die Ausgestaltungsmittel (10) stromaufwärts der Formungsmittel (51, 52) platziert sind, **dadurch gekennzeichnet, dass** die Gestaltungsmittel eine erste Backe (11) und eine zweite Backe (12) umfassen, die um das Rohr (13) herum angeordnet sind und deren Innenkonturen (111, 121, 122) einen Zylinder definieren, wobei die zweite Backe (12) einen Schlitz (123) aufweist, der sich längs auf mindestens einem Teil ihrer Länge erstreckt und relativ zu welchem sich die Schweißmittel (53) erstrecken, wobei Stoppmittel, die einen Anschlag (124) für mindestens eine der freien Kanten der Folie (14) bilden, sich im Wesentlichen auf der Achse des Schlitzes (123) erstrecken.

2. Anlage nach Anspruch 1, **dadurch gekennzeichnet, dass** die Backen (11, 12) relativ zu dem Rohr (13) quer beweglich sind zwischen:
- einer geöffneten Position, in der sie von dem Rohr (13) entfernt sind, und
- einer geschlossenen Position, in der sie das Rohr (13) umschließen.

3. Anlage nach einem der Ansprüche 1 bis 2, **dadurch gekennzeichnet, dass** die zweite Backe (12) eine Innenkontur aufweist, die zwei Viertel eines Zylinders (121, 122) definieren, die konzentrisch sind und unterschiedliche Radien haben, wobei die Viertel des Zylinders (121, 122) auf der Achse des Schlitzes (123) aneinandergesetzt sind.

4. Anlage nach einem der Ansprüche 1 bis 3, **dadurch gekennzeichnet, dass** sie Mittel zur Vorausgestaltung (30) der Folie (14) umfasst, wobei die Vorausgestaltungsmittel (30) stromaufwärts der Ausgestaltungsmittel (10) platziert sind.

5. Anlage nach Anspruch 4, **dadurch gekennzeichnet, dass** die Vorausgestaltungsmittel (30) Mittel zur Führung der Folie (14) umfassen, wobei die Führungsmittel eine Führungsfläche (32) definieren, die einen Eintritt (33) aufweist, der im Wesentlichen eben ist und sich progressiv verengt, um in einem Austritt (34) zu münden, der mindestens einen offenen Kreisabschnitt definiert.

6. Anlage nach Anspruch 5, **dadurch gekennzeichnet, dass** die Führungsfläche (32) von mehreren Fadenelementen (31) gebildet wird, die Seite an Seite angeordnet sind.

7. Anlage nach einem der Ansprüche 4 bis 6, **dadurch gekennzeichnet, dass** die Vorausgestaltungsmittel Elemente umfassen, die einen Anschlag bilden, der die Drehung der freien Kanten der Folie (14) verhindert.

8. Verfahren zum Formen von Flaschen mittels Thermoformung einer Kunststofffolie (14) durch Einsetzen einer Anlage nach einem der Ansprüche 1 bis 7, wobei das Verfahren einen Schritt des Ausgestaltens der Kunststofffolie (14) zu einem Zylinder, einen Schritt des Längsschweißens von freien Kanten des Zylinders, einen Schritt des Umformens einer Flasche mittels Heißblasen des Zylinders in den Formungsmitteln (51, 52) und einen Schritt des Füllens der Flasche umfasst,
wobei der Ausgestaltungsschritt die folgenden Unterschritte umfasst:
- Positionieren der Folie (14) in Bezug auf die Ausgestaltungsmittel (10) derart, dass ihre freien Kanten sich im Wesentlichen in Ausrichtung mit den Stoppmitteln (124) und der Achse des Schlitzes (123) befinden;
- Einbringen der Folie (14) in das Innere der Ausgestaltungsmittel (10) zwischen der ersten Backe (11) und der zweiten Backe (12);
und der Schweißschritt nach Einbringen der Folie (14) in das Innere der Ausgestaltungsmittel (10) durchgeführt wird.

9. Verfahren nach Anspruch 8, **dadurch gekennzeichnet, dass** der Einbringungsschritt durchgeführt wird, wenn sich die Backen (11, 12) in der geöffneten Position befinden und dass der Schweißschritt nach dem Positionieren der Backen (11, 12) in der geschlossenen Position durchgeführt wird.

10. Verfahren nach einem der Ansprüche 8 und 9, **dadurch gekennzeichnet, dass** dem Ausgestaltungsschritt ein Vorausgestaltungsschritt vorausgeht.

11. Verfahren nach Anspruch 10, **dadurch gekennzeichnet, dass** der Vorausgestaltungsschritt in dem Gleitenlassen der Folie (14) gegen die Führungsfläche (32) besteht, die einen Eintritt (33) aufweist, der im Wesentlichen eben ist und sich progressiv verengt, um in einem Austritt (34) zu münden, der einen Kreisabschnitt definiert.

12. Verfahren nach einem der Ansprüche 8 bis 11, **dadurch gekennzeichnet, dass** der Vorausgestaltungsschritt und der Ausgestaltungsschritt im Kalten ausgeführt werden.
